(19) Europäisches Patentamt
European Patent Office
Office européen des brevets

(11) **EP 3 848 766 B1**

(12) **EUROPEAN PATENT SPECIFICATION**

(45) Date of publication and mention
of the grant of the patent:
**23.10.2024 Bulletin 2024/43**

(51) International Patent Classification (IPC):
**G05B 19/418** (2006.01)    **B25B 23/14** (2006.01)
**B25F 5/00** (2006.01)    **B25B 23/147** (2006.01)

(21) Application number: **19858487.2**

(22) Date of filing: **26.06.2019**

(52) Cooperative Patent Classification (CPC):
**B25B 23/1475; B25B 23/147; B25F 5/00**

(86) International application number:
**PCT/JP2019/025444**

(87) International publication number:
**WO 2020/049842 (12.03.2020 Gazette 2020/11)**

(54) **POWER TOOL AND POWER TOOL SYSTEM**

ELEKTROWERKZEUG UND ELEKTROWERKZEUGSYSTEM

OUTIL ÉLECTRIQUE ET SYSTÈME D'OUTIL ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.09.2018 JP 2018166427**

(43) Date of publication of application:
**14.07.2021 Bulletin 2021/28**

(73) Proprietor: **Panasonic Intellectual Property
Management Co., Ltd.
Osaka-shi, Osaka 540-6207 (JP)**

(72) Inventors:
• **MURUI Itaru
Osaka-shi, Osaka 540-6207 (JP)**
• **MURAKAMI Hiroaki
Osaka-shi, Osaka 540-6207 (JP)**
• **HONDA Akiko
Osaka-shi, Osaka 540-6207 (JP)**
• **NAKAMOTO Masanori
Osaka-shi, Osaka 540-6207 (JP)**
• **KUSAGAWA Takashi
Osaka-shi, Osaka 540-6207 (JP)**
• **SATO Masahiro
Osaka-shi, Osaka 540-6207 (JP)**
• **MIZUNO Mitsumasa
Osaka-shi, Osaka 540-6207 (JP)**

(74) Representative: **Müller-Boré & Partner
Patentanwälte PartG mbB
Friedenheimer Brücke 21
80639 München (DE)**

(56) References cited:
**EP-A1- 1 724 065        WO-A1-2016/072045
DE-A1- 102013 016 068    DE-U1- 212017 000 207
JP-A- 2009 269 139        JP-A- 2016 091 316**

# Description

## [TECHNICAL FIELD]

The present disclosure relates to an electric power tool and a system for managing the status of an electric power tool.

## [BACKGROUND ART]

Patent literature 1 discloses a work management apparatus including a work information acquisition unit that acquires work information related to the content of work, a positional information acquisition unit that acquires positional information on a place of work, a workpiece information acquisition unit that acquires workpiece information, and an information management unit that stores the work information, the positional information, and the workpiece information in a storage unit, mapping the information to each other. The work management apparatus further includes a determination unit that determines the properness of a work by referring to data for a design drawing. The result of determining the properness of a work is displayed on a display unit.

[Patent Literature 1] JP2016-91316

EP 1 724 065 A1 describes a fastening tool with a clutch for shutting off transmission of torque, capable of self-diagnosing fastening torque of a screw or the like at low cost without using expensive means such as a torque sensor etc. A fastening tool has a motor, a main shaft engaging with a screw or the like, and a clutch interposed between the motor and the main shaft. The clutch transmits torque from the motor to the main shaft when a load acting on the main shaft is less than a predetermined value, and shuts off torque transmission from the motor to the main shaft when a load acting on the main shaft is equal to or greater than the predetermined value. The fastening tool further has a control unit for controlling the motor. The control unit monitors a current flowing to the motor and determines whether fastening torque is normal or not based on a motor current when transmission of torque from the motor to the main shaft is shut off.

DE 10 2013 016068 A1 relates to a tool and a method for monitoring the condition of a tool. The tool comprises a control device for determining status data of the tool, and a display device for displaying the status data determined by the control device.

DE 21 2017 000207 U1 describes a fault diagnosis system, which comprises an electrically powered tool having a function of storing its own usage history information and a diagnostic device connectable to the electrically powered tool, wherein the diagnostic device reads usage history information of the electrically powered tool from the connected electrically powered tool and, based on the usage history information, identifies a source of an error and a cause of the problem electrically driven tool and provides information on the source of the error and the cause of the problem.

## [SUMMARY]

### [TECHNICAL PROBLEM]

When malfunction occurs in an electric power tool, it becomes difficult to manage the tightening torque of a screw material such as a screw and a bolt precisely. It is therefore desired to build a system for evaluating the current status of an electric power tool and managing the electric power tool properly.

The disclosure addresses the above-described issue, and a general purpose thereof is to provide a technology used for status management of an electric power tool. This purpose is achieved by the subject-matter of the independent claim. Particular embodiments are defined in the dependent claims.

### [SOLUTION TO PROBLEM]

The solution is achieved with a power tool according to claim 1.

Another example not covered by the present invention relates to an electric power tool. The electric power tool includes: a motor; an output shaft on which a front-end tool is adapted to be mounted; a power transmission mechanism that transmits a rotational output of the motor to the output shaft; an acquisition unit that acquires physical quantity data detected while the motor is being rotated; a storage unit that stores the physical quantity data and time information related to time when the physical quantity data is acquired, mapping the physical quantity data and the time information to each other; and a transmission unit that transmits the physical quantity data and the time information to a server system.

### [BRIEF DESCRIPTION OF DRAWINGS]

Fig. 1 shows a configuration of an electric power tool system according to an embodiment;
Fig. 2 shows functional blocks of the electric power tool according to the embodiment;
Fig. 3 shows functional blocks of the server system
Fig. 4 shows examples of physical quantity data and time information; and
Fig. 5 shows an example of an evaluation table for the level of deterioration.

### [DESCRIPTION OF EMBODIMENTS]

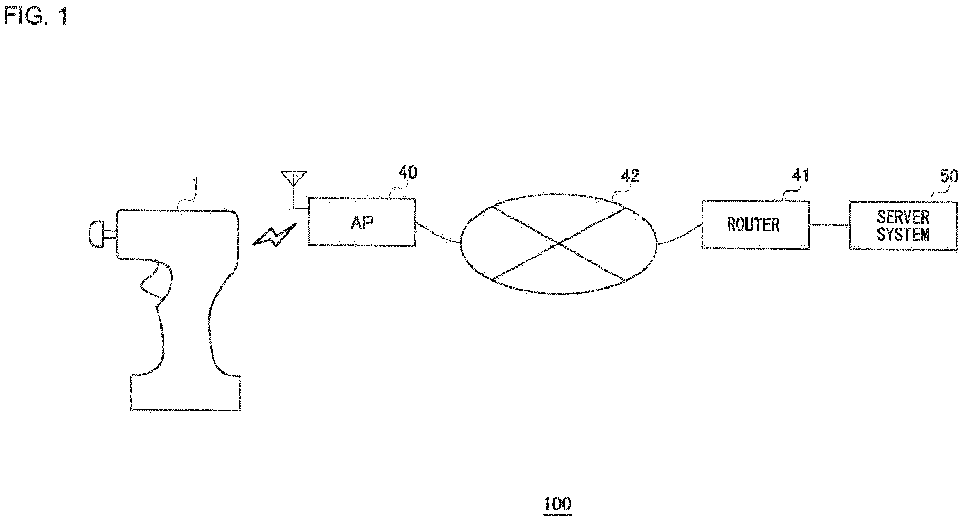

Fig. 1 shows a configuration of an electric power tool system 100 according to an embodiment. The electric power tool system 100 includes an electric power tool 1 and a server system 50. An access point (hereinafter, "AP") 40 is interconnected with the electric power tool 1, which is a wireless LAN client, and is connected to an external network 42 such as the Internet. A router 41 is connected to the server system 50 by wire and is connected to the network 42. The electric power tool 1 and the server system 50 are communicably connected via the network 42.

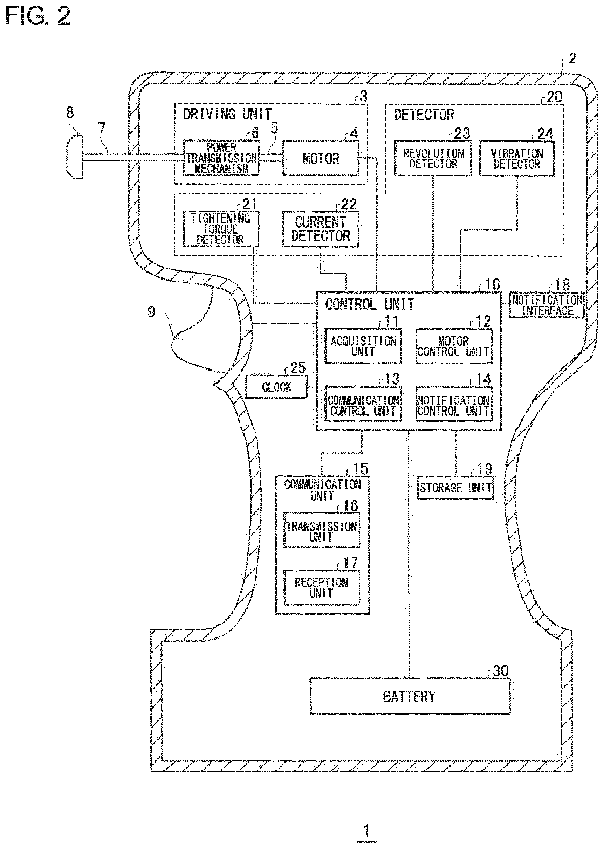

Fig. 2 shows functional blocks of the electric power tool 1 according to the embodiment. An electric power tool 1 includes a housing 2. A driving unit 3, a control unit 10, a communication unit 15, a notification interface 18, a storage unit 19, a detector 20, a clock 25, and a battery 30 are provided in the housing 2. The battery 30 is mounted on the lower end of the housing 2 to supply electric power to the constituting elements of the electric power tool 1. The lower end of the housing 2 may be formed as a battery pack separate from the main body of the tool and configured to be removably attached to the main body of the tool. The clock 25 is a real-time clock. The clock 25 generates current date and time information and supplies the information to the control unit 10.

The driving unit 3 includes the motor 4, which is driving source, and a power transmission mechanism 6 coupled to a motor shaft 5 of the motor 4 to drive the output shaft 7. A front-end tool mount 8 is coupled to the output shaft 7, and a front-end tool such as a driver that applies a tightening torque to a screw member is adapted to be mounted on the front-end tool mount 8. The power transmission mechanism 6 is a mechanism that transmits the rotational output of the motor 4 to the output shaft 7. The power transmission mechanism 6 may include a planetary gear deceleration mechanism in mesh with a pinion gear attached to the motor shaft 5. The electric power tool 1 according to the embodiment is a rotary impact tool, and the power transmission mechanism 6 includes an impact mechanism for applying an intermittent rotary impact force to the output shaft 7.

The detector 20 detects physical quantity data in the electric power tool 1. The detector 20 may include a tightening torque detector 21, a current detector 22, a revolution detector 23, and a vibration detector 24. The tightening torque detector 21 detects the tightening torque of the screw member. The tightening torque detector 21 may include a magnetostrictive torque sensor attached to the output shaft 7 and a rotation angle sensor of the output shaft 7. The torque sensor uses a coil provided in a non-rotated part to detect the variation in magnetic permeability determined by the axial distortion caused by applying a torque to the output shaft 7 and outputs a voltage signal determined by the distortion. The rotation angle sensor outputs the rotation angle of the output shaft 7. The tightening torque detector 21 uses the voltage signal determined by the distortion and the rotation angle of the output shaft 7 to calculate and output the tightening torque of the screw member.

The current detector 22 detects an electric current supplied to the motor 4. The revolution detector 23 detects the number of revolutions (rotation speed) of the motor 4. The revolution detector 23 may be a magnetic rotary encoder, a Hall element IC, etc. that detects the rotation angle of the motor 4. The vibration detector 24 detects the vibration generated in the housing 2. The vibration detector 24 may be a displacement sensor, a speed sensor, or an acceleration sensor and may be formed by an electromagnetic element, a piezoelectric element, a capacitance element, etc.

The communication unit 15 includes a transmission unit 16 and a reception unit 17. The communication unit 15 may be a module configured to communicate wirelessly with the AP 40 according to a communication protocol such as the IEEE802.11 protocol. The communication unit 15 may also include a wireless communication function in the fourth-generation mobile communication system. The communication unit 15 may not be a wireless communication module but a module configured to communicate with an external device by wire via, for example, a USB cable.

The notification interface 18 is an output interface for outputting information to the user. The notification interface 18 may include a speaker for audio output of information and/or a display for outputting information on a screen. The storage unit 19 is a memory and includes a read only memory (ROM) and a random access memory (RAM) . The ROM stores at least identification information (tool ID) for identifying the electric power tool 1. The ROM further stores a control program used by the motor control unit 12. The RAM stores the information transmitted from the transmission unit 16 temporarily and stores the information received by the reception unit 17 temporarily.

The electric power tool or the entity that executes the method according to the disclosure is provided with a computer. By causing the computer to run a program, the function of the tool or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The terms IC and LSI may change depending on the integration degree, and the processor may be comprised of a system LSI, a very large scale integration (VLSI), or an ultra large scale integration (USLI). A field programmable gate array (FPGA) programmed after the LSI is manufactured, or a reconfigurable logic device, in which the connections inside the LSI are reconfigurable or the circuitry blocks inside the LSI can be set up, can be used for the same purpose. The plurality of electronic circuits may be integrated in one chip or provided in a plurality of chips. The plurality of chips may be aggregated in one device or provided in a plurality of apparatuses. The program is recorded in a non-transitory recording medium such as a computer-readable ROM, optical disk, and hard disk drive. The program may be stored in a recording medium in advance or supplied to a recording medium via wide area communication network including the Internet.

The control unit 10 is implemented by a computer carried on a control board. The control unit 10 has the function for integrated control of the electric power tool 1 and performs various processes related to the electric power tool 1. The control unit 10 includes an acquisition unit 11, a motor control unit 12, a communication control unit 13, and a notification control unit 14.

The acquisition unit 11 acquires physical quantity data detected while the motor 4 is being rotated. The physical quantity data detected while the motor 4 is being rotated may at least include physical quantity data detected by the detector 20. In other words, the acquisition unit 11 acquires the tightening torque value from the tightening torque detector 21, the motor current value from the current detector 22, the number of revolutions of the motor from the revolution detector 23, and the vibration data from the vibration detector 24 while the motor 4 is being rotated. The acquisition unit 11 stores the physical quantity data and time information related to the time when the physical quantity data is acquired in the storage unit 19, mapping the data and the information to each other.

The time information mapped to the physical quantity data may be the absolute time information indicating the current time supplied from the clock 25. The mapped time information may be the relative time information indicating the time elapsed since the reference time (e.g., the date and time of manufacturing or the date and time of first use). In either case, mapping the physical quantity data and the time information to each other ensures that the server system 50 can analyze the temporal transition of physical quantity data. As described above, the storage unit 19 stores the physical quantity data and the time information related to the time when the physical quantity data is acquired, mapping the data and the information to each other.

The frontward grip portion of the housing 2 is provided with a user operation switch 9 that can be manipulated by the user. The user operation switch 9 may be a trigger switch that can be pulled by the user for manipulation. The motor control unit 12 controls on and off of the motor 4 in accordance with the manipulation of the user operation switch 9 and controls the current applied to the motor 4 in accordance with how much the user operation switch 9 is manipulated to adjust the number of revolutions of the motor. A target torque value to be achieved by the current work is set in the storage unit 19 before the work is started. The motor control unit 12 monitors the tightening torque value detected by the tightening torque detector 21. When the tightening torque value reaches the target torque value, the rotation of the motor 4 is automatically stopped. The tightening torque of the screw member is managed by performing the control as described above.

The communication control unit 13 controls the transmission operation performed by the transmission unit 16 and the reception operation performed by the reception unit 17. The communication unit 15 is connected to the server system 50 via the network 42. In the electric power tool system 100 of the embodiment, the communication control unit 13 causes the physical quantity data and the time information stored in the storage unit 19 to be transmitted from the transmission unit 16 to the server system 50 after the rotation of the motor 4 is stopped. It is preferred that the transmission unit 16 transmit the physical quantity data and the time information acquired in relation to a single tightening work to the server system 50 after the work is completed.

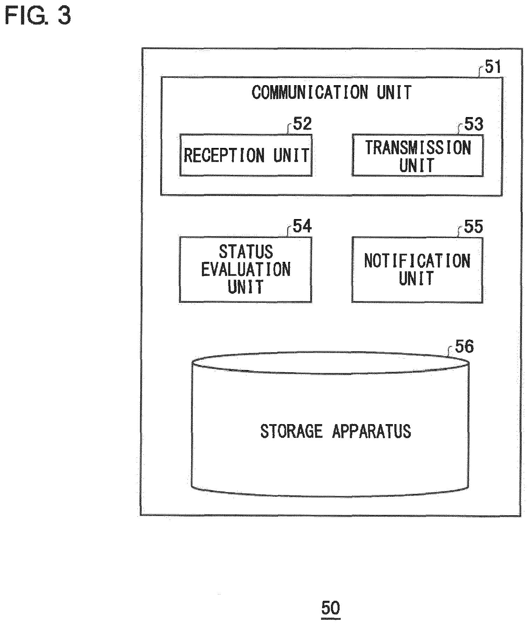

Fig. 3 shows functional blocks of the server system 50 according to the embodiment. The server system 50 includes a communication unit 51, a status evaluation unit 54, a notification unit 55, and a storage apparatus 56. The communication unit 51 includes a reception unit 52 and a transmission unit 53.

The server system 50 may be operated and managed by, for example, an entity manufacturing the electric power tool 1. Fig. 1 shows that the server system 50 is connected only to one electric power tool 1, but the server system 50 is connected to a plurality of electric power tools 1 and receives the physical quantity data and the time information acquired in the respective electric power tools 1. The transmission unit 16 in the electric power tool 1 transmits the physical quantity data and the time information to the server system 50, mapping the data and the time information to the tool ID of the electric power tool 1.

The reception unit 52 receives the physical quantity data and the time information transmitted from the electric power tool 1. The storage apparatus 56 stores the physical quantity data and the time information received, mapping the information to the tool ID of the electric power tool 1 The status evaluation unit 54 evaluates the level of the status of the electric power tool 1 by using the physical quantity data and the time information received. For example, the status evaluation unit 54 determines whether the electric power tool is out of order or about to be out of order or determines the level of deterioration, by evaluating the level of the tool status.

The server system 50 may be configured to include one or a plurality of processing apparatuses. For example, the server system 50 may include a collection apparatus that collects the physical quantity data transmitted from the electric power tool 1 and an evaluation apparatus that evaluates the level of the status of the electric power tool 1 by using the collected physical quantity data. In this case, the communication unit 51 and the storage apparatus 56 shown in Fig. 3 may be provided as features on the side of the collecting apparatus, and the status evaluation unit 54 and the notification unit 55 may be provided as features on the side of the evaluation apparatus.

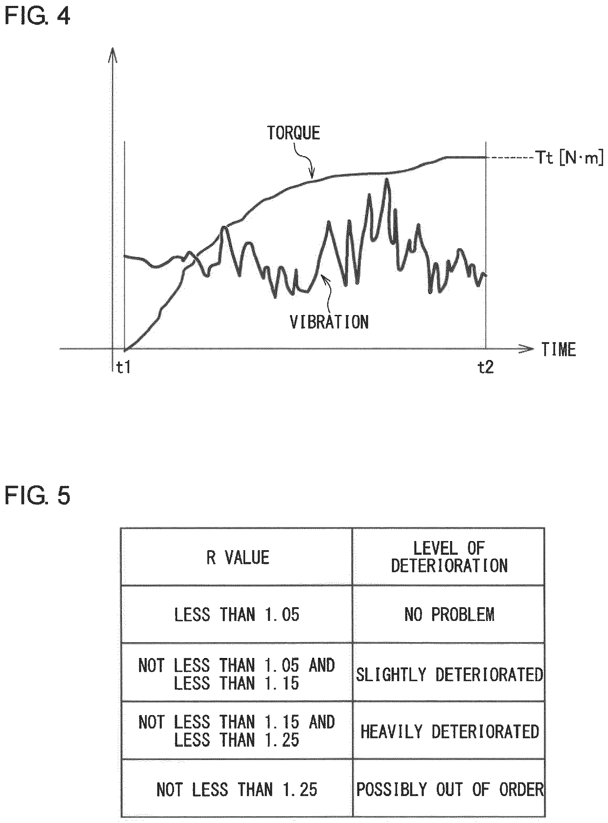

Fig. 4 shows examples of physical quantity data and time information received for a single work. Of the physical quantity data, Fig. 4 shows a relationship between the tightening torque value and the vibration data. This example shows the variation in the physical quantity data during a period between the time (t1) when the tightening torque value is detected to exceed 0 and the time (t2) when the tightening torque value reaches the target torque value (Tt[N·m]) and the motor 4 is automatically stopped.

The storage apparatus 56 stores a collection of a plurality of sets of physical quantity data and time information acquired for each of the works in the past, mapping the data and information to the tool ID. When the reception unit 52 receives the physical quantity data and the time information mapped to the tool ID, the status evaluation unit 54 reads the physical quantity data and the time information mapped to the same tool ID from the storage apparatus 56 to analyze the temporal transition of the status of the electric power tool 1 and determine the level of the status.

More specifically, when the status evaluation unit 54 refers to the data for the current tightening torque value and determines that the ultimate tightening torque value is Tt[N·m], the status evaluation unit 54 refers to the physical quantity data stored in the past to identify physical quantity data for which the ultimate tightening torque value is Tt[N·m]. The status evaluation unit 54 uses data indicating the change in the tightening torque value occurring as works have been performed a predetermined number of (e.g., 50) times in the immediate past to determine an average time (Ts) elapsed since the point of time when the tightening torque value exceeds 0 until it reaches Tt[N.m]. For example, the status evaluation unit 54 may calculate and maintain, for each ultimate tightening torque value, the average time Ts required to reach the ultimate tightening torque in advance.

The status evaluation unit 54 calculates a ratio (R) between the current time required to reach the ultimate value (t2-t1) and the average time Ts as follows:

$$R = (t2 - t1) / Ts$$

The status evaluation unit 54 evaluates the level of the status of the electric power tool 1, and, in this case, the level of deterioration, in accordance with the R value.

Fig. 5 shows an example of an evaluation table for the level of deterioration. The evaluation table defines levels of deterioration determined by the R value are defined. The status evaluation unit 54 of the embodiment evaluates the status of the electric power tool 1 in accordance with the evaluation table. Deterioration of the tool is comprised of a variety of factors such as looseness occurring between components due to friction or the like, position gap between components caused by drop of the tool, contact failure in the electrical system, etc.

For convenience, the evaluation table shown in Fig. 5 will be explained by only discussing degrees of the magnitude of looseness. "Slightly deteriorated" means that looseness is identified but only in a negligible degree.

"Heavily deteriorated" means that looseness has grown so large that a problem with the work efficiency begins to be caused and the tool is one step short of being out of order. "Possibly out of order" means that the tool is in a state that can be referred to as "out of order". As described below, the evaluation result is transmitted to the electric power tool 1 and communicated to the user.

The evaluation table shown in Fig. 5 defines the levels of deterioration determined by the ratio (R). Alternatively, the level of deterioration may be defined in accordance with a difference between the current time required to reach the ultimate value (t2-t1) and the average time Ts.

Given the ultimate tightening torque value Tt[N·m], the variation characteristic of the tightening torque value may differ depending on the type of the front-end tool for the tightening work and the type of the work tightened. Factors that make the variation characteristic differ include a difference in the length of the front-end tool, a difference in the hardness of the work, etc.

Thus, the status evaluation unit 54 may refer to the physical quantity data stored in the past to identify the physical quantity data for which the ultimate tightening torque value is Tt[N·m] and then extract the physical quantity data for which the variation characteristic of the vibration data is common. That the vibration characteristic of the vibration data is common means that the work situation such as the type of the front-end tool used and the type of the work is similar. The status evaluation unit 54 may extract the physical quantity data in similar work situations and use data indicating the change in the tightening torque value occurring as works have been performed a predetermined number of (e.g., 50) times in the immediate past to determine the average time (Ts') elapsed since the point of time when the tightening torque value exceeds 0 until it reaches Tt[N· m]. In this case, the status evaluation unit 54 will be evaluating the variation characteristic of the tightening torque value in similar work situations so that the precision of evaluation will be enhanced.

The status evaluation unit 54 may evaluate the status of the electric power tool 1 by taking the variation characteristic of the value of the current supplied to the motor 4 or the variation in the number of revolutions of the motor 4 into consideration as well as the vibration data. When the current physical quantity data compared with the physical quantity data in a similar work situation in the past shows that the amount of current supplied to the motor is small or that the number of revolutions of the motor 4 is small, for example, the capacity of the battery 30 may have dropped. Thus, the status evaluation unit 54 may not evaluate the level of deterioration using the evaluation table when it is determined that a characteristic abnormality is caused by a drop in the capacity of the battery 30. This reduces the likelihood that the status evaluation unit 54 improperly yields an evaluation "heavily deteriorated" or "possibly out of order" regardless of the fact that the electric power tool 1 has not been deteriorated.

The notification unit 55 causes the transmission unit 53 to transmit evaluation data indicating the result of evaluation by the status evaluation unit 54 to the electric power tool 1. In the case the evaluation result is "no problem", the notification unit 55 does not cause the transmission unit 53 to transmit the evaluation data. In other words, the notification unit 55 may cause the transmission unit 53 to transmit the evaluation data to the electric power tool 1 only when the status evaluation unit 54 evaluates the status as "slightly deteriorated", "heavily deteriorated", or "possibly out of order".

In the electric power tool 1, the reception unit 17 receives the transmitted evaluation data. The notification control unit 14 causes the notification interface 18 to communicate the evaluation data. The notification interface 18 provides an audio output of the evaluation result from the speaker or provides a screen output of the evaluation result from a display. The user can know the status of the electric power tool 1 by referring to the content communicated from the notification interface 18. It is preferred that the user provided with "possibly out of order" notification send the electric power tool 1 for repair without delay.

Described above is an explanation based on an embodiment. The embodiment is intended to be illustrative only and it will be understood by those skilled in the art that various modifications to constituting elements and processes could be developed and that such modifications are also within the scope of the present disclosure. The detector 20 may further include a temperature detector for detecting temperature and a sound detector for detecting sound.

A summary of an embodiment of the present disclosure is given below. An electric power tool system (100) according to the present disclosure includes an electric power tool (1) and a server system (50). The electric power tool (1) may include: a motor (4); an output shaft (7) on which a front-end tool is adapted to be mounted; a power transmission mechanism (6) that transmits a rotational output of the motor to the output shaft; an acquisition unit (11) that acquires physical quantity data detected while the motor is being rotated; a storage unit (19) that stores the physical quantity data and time information related to time when the physical quantity data is acquired, mapping the data and the information to each other; and a tool-side transmission unit (16) that transmits the physical quantity data and the time information to the server system (50). The server system (50) may include: a server-side reception unit (52) that receives the physical quantity data and the time information transmitted; and a status evaluation unit (54) that evaluates a level of a status of the electric power tool (1) by using the physical quantity data and the time information. The physical quantity data preferably includes vibration data indicating vibration of the electric power tool detected while the motor is being rotated and also includes a tightening torque value.

The server system (50) may include: a server-side transmission unit (53) that transmits evaluation data yielded by the status evaluation unit (54) to the electric power tool (1), and the electric power tool (1) may include: a tool-side reception unit (17) that receives the evaluation data transmitted; and a notification interface (18) that communicates the evaluation data.

The tool-side transmission unit (16) may transmit the physical quantity data and the time information to the server system (50), mapping the physical quantity data and the time information to identification information on the electric power tool (1), and the server system (50) may include: a storage apparatus (56) that stores the physical quantity data and the time information, mapping the physical quantity data and the time information to the identification information on the electric power tool (1). The status evaluation unit (54) preferably uses the physical quantity data and the time information stored and mapped to the identification information on the electric power tool to analyze temporal transition of the status of the electric power tool and evaluate the level of the status.

An electric power tool (1) according to another embodiment of the present disclosure may include: a motor (4); an output shaft (7) on which a front-end tool is adapted to be mounted; a power transmission mechanism (6) that transmits a rotational output of the motor to the output shaft; an acquisition unit (11) that acquires physical quantity data detected while the motor is being rotated; a storage unit (19) that stores the physical quantity data and time information related to time when the physical quantity data is acquired, mapping the physical quantity data and the time information to each other; and a transmission unit (17) that transmits the physical quantity data and the time information to a server system.

[INDUSTRIAL APPLICABILITY]

The present disclosure can be used in the fields of electric power tools and management of the status of electric power tools.

[REFERENCE SIGNS LIST]

1 ... electric power tool, 4 ... motor, 6 ... power transmission mechanism, 7 ... output shaft, 8 ... front-end tool mount, 10 ... control unit, 11 ... acquisition unit, 12 ... motor control unit, 13 ... communication control unit, 14 ... notification control unit, 15 ... communication unit, 16 ... transmission unit, 17 ... reception unit, 18 ... notification interface, 19 ... storage unit, 20 ... detector, 21 ... tightening torque detector, 22 ... current detector, 23 ... revolution detector, 24 ... vibration detector, 25 ... clock, 50 ... server system, 51 ... communication unit, 52 ... reception unit, 53 ... transmission unit, 54 ... status evaluation unit, 55 ... notification unit, 56 ... storage apparatus, 100 ... electric power tool system

## Claims

1. An electric power tool system (100) including an electric power tool (1) and a server system (50), the electric power tool (1) including:

    a motor (4);
    an output shaft (7) on which a front-end tool is adapted to be mounted;
    a power transmission mechanism (6) that transmits a rotational output of the motor to the output shaft;
    an acquisition unit (11) that acquires physical quantity data detected while the motor is being rotated;
    a storage unit (19) that stores the physical quantity data and time information related to time when the physical quantity data is acquired, mapping the physical quantity data and the time information to each other; and
    a tool-side transmission unit (16) that transmits the physical quantity data and the time information to the server system, mapping the physical quantity data and the time information to identification information on the electric power tool (1), the server system (50) including:

        a storage apparatus (56) that stores past physical quantity data and past time information, mapping the past physical quantity data and the past time information to the identification information on the electric power tool; and
        a server-side reception unit (52) that receives the physical quantity data and the time information transmitted from the tool-side transmission unit (16) and mapped to the identification information on the electric power tool; and
        a status evaluation unit (54) that reads, from the storage apparatus, the past physical quantity data and the past time information stored and mapped to the identification information same as the identification information mapped to the physical quantity data and the time information which are received by the server-side reception unit (52), analyzes temporal transition of a status of the electric power tool by using the received physical quantity data and the time information, and the past physical quantity data and the past time information read from the storage apparatus, and evaluates a level of the status of the electric power tool.

2. The electric power tool system (100) according to claim 1, wherein the physical quantity data includes vibration data indicating vibration of the electric power tool detected while the motor is being rotated and also includes a tightening torque value.

3. The electric power tool system (100) according to claim 1 or 2, wherein the server system (50) includes:

    a server-side transmission unit (53) that transmits evaluation data yielded by the status evaluation unit to the electric power tool, and the electric power tool (1) includes:

        a tool-side reception unit (17) that receives the evaluation data transmitted; and
        a notification interface (18) that communicates the evaluation data.

## Patentansprüche

1. Ein Elektrowerkzeugsystem (100), das ein Elektrowerkzeug (1) und ein Serversystem (50) beinhaltet, wobei das Elektrowerkzeug (1) Folgendes beinhaltet:

    einen Motor (4);
    eine Ausgangswelle (7), auf der ein Frontend-Werkzeug dazu ausgelegt ist, montiert zu werden;
    einen Energieübertragungsmechanismus (6), der einen Rotationsausgang des Motors auf die Ausgangswelle überträgt;
    eine Erfassungseinheit (11), die physische Quantitätsdaten erfasst, die detektiert werden, während der Motor gedreht wird;
    eine Speichereinheit (19), die die physischen Quantitätsdaten und Zeitinformationen bezüglich eines Zeitpunktes, zu dem die physischen Quantitätsdaten erfasst werden, speichert, wobei die physischen Quantitätsdaten und die Zeitinformationen aufeinander abgebildet bzw. einander zugeordnet werden (*mapping*); und
    eine werkzeugseitige Übertragungseinheit (16), die die physischen Quantitätsdaten und die Zeitinformationen an das Serversystem überträgt, wobei die physischen Quantitätsdaten und die Zeitinformationen Identifikationsinformationen auf dem Elektrowerkzeug (1) zugeordnet werden, wobei das Serversystem (50) Folgendes beinhaltet:

        eine Speichervorrichtung (56), die vergangene physische Quantitätsdaten und vergangene Zeitinformationen speichert, wobei die vergangenen physischen Quantitätsdaten und die vergangenen Zeitinformationen den Identifikationsinformationen auf dem elektrischen Werkzeug zugeordnet werden; und

eine serverseitige Empfangseinheit (52), die die physischen Quantitätsdaten und die Zeitinformationen empfängt, die von der werkzeugseitigen Übertragungseinheit (16) übertragen und den Identifikationsinformationen auf dem elektrischen Werkzeug zugeordnet werden; und

eine Statusauswerteinheit (54), die Folgendes bewerkstelligt: Lesen, aus der Speichervorrichtung, der gespeicherten und vergangenen physischen Quantitätsdaten und vergangenen Zeitinformationen, die den Identifikationsinformationen zugeordnet sind, die den Identifikationsinformationen gleichen (same as), die den physischen Quantitätsdaten und den Zeitinformationen zugeordnet sind, die von der serverseitigen Empfangseinheit (52) empfangen werden, Analysieren des zeitlichen Übergangs eines Status des Elektrowerkzeugs unter Verwendung der empfangenen physischen Quantitätsdaten und der Zeitinformationen, und der vergangenen physischen Quantitätsdaten und der vergangenen Zeitinformationen, die aus der Speichervorrichtung gelesen werden, und Bewerten eines Statuspegels des Elektrowerkzeugs.

2. Das Elektrowerkzeugsystem (100) nach Anspruch 1, wobei die physischen Quantitätsdaten Vibrationsdaten beinhalten, die die Vibration des Elektrowerkzeugs angeben, die erfasst wird, während der Motor gedreht wird, und auch einen Anzugsdrehmomentwert beinhalten.

3. Das Elektrowerkzeugsystem (100) nach Anspruch 1 oder 2, wobei
das Serversystem (50) Folgendes beinhaltet:

eine serverseitige Übertragungseinheit (53), die von der Zustandsauswerteeinheit hervorgebrachte Auswertedaten an das Elektrowerkzeug überträgt, und wobei
das Elektrowerkzeug (1) Folgendes beinhaltet:

eine werkzeugseitige Empfangseinheit (17), die die übertragenen Auswertedaten empfängt; und
eine Benachrichtigungsschnittstelle (18), die die Auswertedaten übermittelt.

## Revendications

1. Un système d'outil électrique (100) incluant un outil électrique (1) et un système de serveur (50), l'outil électrique (1) incluant :

un moteur (4) ;
un arbre de sortie (7) sur lequel un outil d'extrémité avant peut être monté ;
un mécanisme de transmission de puissance (6) qui transmet une puissance de rotation du moteur à l'arbre de sortie ;
une unité d'acquisition (11) qui acquiert des données de quantité physique détectées pendant que le moteur tourne ;
une unité de stockage (19) qui stocke les données de quantité physique et des informations temporelles relatives au moment où les données de quantité physique sont acquises, en mettant en correspondance les données de quantité physique et les informations temporelles ; et
une unité de transmission côté outil (16) qui transmet les données de quantité physique et les informations temporelles au système serveur, en mettant en correspondance les données de quantité physique et les informations temporelles avec les informations d'identification sur l'outil électrique (1),
le système serveur (50) incluant :

un appareil de stockage (56) qui stocke les données de quantité physique antérieures et des informations temporelles antérieures, en mettant en correspondance les données de quantité physique antérieures et les informations temporelles antérieures avec les informations d'identification de l'outil électrique ; et
une unité de réception côté serveur (52) qui reçoit les données de quantité physique et les informations temporelles transmises par l'unité de transmission côté outil (16) et mises en correspondance avec les informations d'identification de l'outil électrique ; et
une unité d'évaluation d'état (54) qui lit, à partir de l'appareil de stockage, les données de quantité physique antérieures et les informations temporelles antérieures stockées et mises en correspondance avec les informations d'identification identiques aux (same as) informations d'identification mises en correspondance avec les données de quantité physique et les informations temporelles reçues par l'unité de réception côté serveur (52), analyse la transition temporelle d'un état de l'outil électrique en utilisant les données de quantité physique reçues et les informations temporelles, ainsi que les données de quantité physique antérieures et les informations temporelles antérieures lues à partir de l'appareil de stockage, et évalue un niveau de l'état de l'outil électrique.

2. Le système d'outil électrique (100) d'après la revendication 1, sachant que
les données de quantité physique incluent des données de vibration indiquant une vibration de l'outil électrique détectée pendant la rotation du moteur et incluent également une valeur de couple de serrage.

3. Le système d'outil électrique (100) d'après la revendication 1 ou 2, sachant que
le système serveur (50) inclut :

une unité de transmission côté serveur (53) qui transmet des données d'évaluation produites par l'unité d'évaluation d'état à l'outil électrique, et que
l'outil électrique (1) inclut :

une unité de réception côté outil (17) qui reçoit les données d'évaluation transmises ; et
une interface de notification (18) qui communique les données d'évaluation.

FIG. 1

EP 3 848 766 B1

100

FIG. 2

DRIVING UNIT — 3

POWER TRANSMISSION MECHANISM — 6

MOTOR — 4

DETECTOR — 20

REVOLUTION DETECTOR — 23

VIBRATION DETECTOR — 24

TIGHTENING TORQUE DETECTOR — 21

CURRENT DETECTOR — 22

CONTROL UNIT — 10

NOTIFICATION INTERFACE — 18

ACQUISITION UNIT — 11

MOTOR CONTROL UNIT — 12

CLOCK — 25

COMMUNICATION CONTROL UNIT — 13

NOTIFICATION CONTROL UNIT — 14

COMMUNICATION UNIT — 15

STORAGE UNIT — 19

TRANSMISSION UNIT — 16

RECEPTION UNIT — 17

BATTERY — 30

1

FIG. 3

COMMUNICATION UNIT ⌐51

RECEPTION UNIT ⌐52

TRANSMISSION UNIT ⌐53

STATUS EVALUATION UNIT ⌐54

NOTIFICATION UNIT ⌐55

STORAGE APPARATUS ⌐56

50

FIG. 4

FIG. 5

| R VALUE | LEVEL OF DETERIORATION |
|---|---|
| LESS THAN 1.05 | NO PROBLEM |
| NOT LESS THAN 1.05 AND LESS THAN 1.15 | SLIGHTLY DETERIORATED |
| NOT LESS THAN 1.15 AND LESS THAN 1.25 | HEAVILY DETERIORATED |
| NOT LESS THAN 1.25 | POSSIBLY OUT OF ORDER |

**EP 3 848 766 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016091316 A
- EP 1724065 A1
- DE 102013016068 A1
- DE 212017000207 U1